# EUROPEAN PATENT SPECIFICATION

(11) **EP 0 661 890 B1**
(45) Date of publication and mention of the grant of the patent: **24.05.2000**
(21) Application number: 94309863.2
(22) Date of filing: 28.12.1994
(51) Int. Cl.: H04N 9/83, H04N 5/782

(54) **Double-deck magnetic recording/reproducing apparatus**
Magnetisches Doppeldeck Aufnahme-/Wiedergabegerät
Magnétoscope avec double lecteur/enregistreur

(30) Priority: 31.12.1993 KR 9332294
(43) Date of publication of application: 05.07.1995
(73) Proprietor: Samsung Electronics Co., Ltd., Suwon-city, Kyungki-do 441-370 (KR)
(72) Inventor: Kim, Sang-uk, 161-406, Jugong Apt., 333, Suwon-city, Kyungki-do (KR)
(74) Representative: Chugg, David John

(56) References cited:
- GB-A- 2 192 320
- US-A- 5 057 934
- PATENT ABSTRACTS OF JAPAN vol. 13, no. 594 (E-867) 27 December 1989 & JP-A-01 248 896 (TOSHIBA) 4 October 1989
- PATENT ABSTRACTS OF JAPAN vol. 13, no. 155 (E-743) 14 April 1989 & JP-A-63 311 896 (FUJI PHOTO FILM) 20 December 1988
- PATENT ABSTRACTS OF JAPAN vol. 7, no. 186 (E-193) 16 August 1983 & JP-A-58 088 988 (MATSUSHITA) 27 May 1983
- PATENT ABSTRACTS OF JAPAN vol. 17, no. 128 (E-1333) 18 March 1993 & JP-A-04 302 294 (SONY) 26 October 1992

## Description

The present invention relates to a double-deck magnetic recording/reproducing apparatus, and particularly but not exclusively, to a double-deck magnetic recording/reproducing apparatus which can use 8mm- and VHS-format magnetic tapes in recording and reproducing.

The ongoing miniaturization of camcorders has involved the use of both 0.5-inch VHS-format tape and 8mm tape. The 8mm tape recorded with an 8mm camcorder cannot be reproduced by an ordinary VHS videocassette recorder for home use. Recently, a double-deck videocassette recorder, which can record/reproduce both tape types by mounting an 8mm deck and VHS deck together in one set, has been introduced.

Such a double-deck videocassette recorder is capable of copying or editing a video signal from either an 8mm tape or a VHS tape onto the other type of tape. Since the recording frequency band for the 8mm video signal is 4.2-5.4MHz while that for the VHS video signal is 3.4-4.4MHz, the FM signal cannot be copied directly. In order to copy the FM signal, a reproduced FM signal of a first format is demodulated, a composite video signal is transmitted, and the transmitted composite video signal is modulated into an FM signal of a second format.

Through this signal conversion procedure with respect to the composite video signal, noise is introduced and the image quality is deteriorated accordingly.

GB 2 192 320, in the name of Samsung Electronics Co. Ltd., discloses a doubledeck magnetic recording/reproducing method and apparatus for recording/reproducing tapes of first and second formats, in which playback FM video signals of a first format from the tapes of said first format are converted to signals in the second format and copied on to tapes of the second format during a first copying mode and playback FM video signals of a second format from tapes of the second format are converted to signals in the first format and copied on to tapes of the first format during a second copying mode.

US 5 057 934 (Samsung) addresses the problem of noise and improvement of image quality by converting playback FM video signals of first and second formats to signals of second and first formats respectively without undergoing FM demodulation and remodulation during the conversion.

According to a first aspect of the invention, there is provided a double-deck magnetic recording/reproducing apparatus for recording/reproducing tapes of a first and a second format, the apparatus comprising:
a first recording/reproducing portion for, during playback, receiving a first format encoded video playback signal comprising an FM video signal of a first frequency band and a first frequency down-converted chrominance signal from a tape of said first format, separating the first format encoded video playback signal into a chrominance and a first playback FM video signal portion and constructing therefrom a first composite video signal by up converting the first frequency down converted chrominance signal, demodulating the FM video signal of first frequency band and mixing together the up converted first frequency chrominance signal and the FM demodulated video signal; and, during recording, receiving an input composite video signal, separating the input composite video signal into a chrominance and a first recording FM video signal portion and constructing therefrom a first format encoded video recording signal by FM-modulating the first recording FM video signal into the first frequency band, down converting the chrominance portion into the first frequency and mixing together the down converted and modulated signals for recording on said tape of said first format;
a second recording/reproducing portion for, during playback, receiving a second format encoded video playback signal comprising an FM video signal of a second frequency band and a second frequency down-converted chrominance signal from a tape of said second format, separating the second format encoded video playback signal into a chrominance and a second playback FM video signal portion and constructing therefrom a second composite video signal by up converting the second frequency down converted chrominance signal, demodulating the FM video signal of second frequency band and mixing together the up converted second frequency chrominance signal and the FM demodulated video signal; and, during recording, receiving an input composite video signal, separating the input composite video signal into a chrominance and a second recording FM video signal portion and constructing therefrom a second format encoded video recording signal by FM modulating the second recording FM video signal into the second frequency band, down converting the chrominance portion into the second frequency and mixing together the down converted and modulated signals for recording on said tape of said second format; and
FM converter and switching means comprising an FM converter means, a first switching means and a second switching means for, in accordance with a given copying mode, receiving either the first or second playback FM video signal portions from said first recording/reproducing portion or from said second recording/reproducing portion respectively, and converting the received signal into a recording FM video signal of said second or first format respectively and transmitting the particular FM recording video signal to the respective second or first recording/reproducing portion to enable the copying of signals from said first or second format into signals of said second or first format respectively, wherein the first switching means selectively supplies the recording FM video signal of the first recording/reproducing portion and the recording FM video signal of said FM converter to a recording head for the tape of said first format according to a first given copying mode and the second switching means selectively supplies the recording FM video signal of said second recording/reproducing portion and the recording FM video signal of said FM converter to a recording head for the tape of said second format according to the second given copying mode, the apparatus being characterised in that:
said FM converter means comprises: input selection switching means for selectively receiving the playback FM video signals from said first and second recording/reproducing portions according to the given copying mode; wave-shaping means for receiving said selected play-back FM video signal and generating a square-wave signal; frequency detecting means for comparing the frequency of said square-wave signal with the frequency of a given first reference signal and detecting the frequency difference; control voltage generating means for integrating said square-wave signal and selectively generating a direct-current signal proportional to the frequency and a signal in which said direct-current signal is inverted, as a control voltage signal, according to said given copying mode; frequency generating means for generating an FM video signal of a predetermined band at a given second reference signal in response to said frequency detection signal and said control voltage signal; reference signal generating means for selectively generating said first reference signal for said first format and said second reference signal for said second format according to said given copying mode and supplying said first and second reference signals to said frequency detecting means and frequency generating means; and output means for buffering and outputting the output of said frequency generating means.

Said first format may be utilised for 8mm video tapes and said second format utilised for 0.5 inch VHS-format video tapes.

For a better understanding of the invention, and to show how embodiments of the same may be carried into effect, reference will now be made, by way of example, to the accompanying diagrammatic drawings, in which:
Figure 1 is a configuration diagram of a conventional double-deck magnetic recording/reproducing apparatus;
Figure 2 is a block diagram of a double-deck magnetic recording/reproducing apparatus according to an embodiment of the present invention; and
Figure 3 is a circuit diagram of the FM converter of Figure 2.

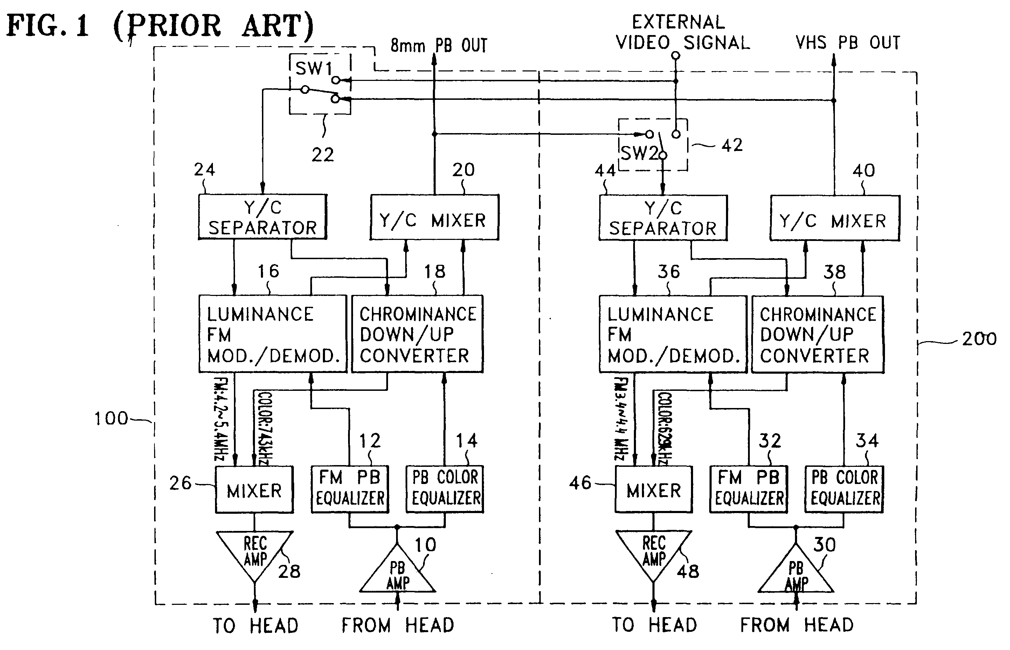

Referring to Figure 1, a recording/reproducing system 100 for 8mm tape amplifies a signal picked up from a playback head by a playback (PB) amplifier 10, during playback. The amplified playback signal is equalized to a playback FM video signal of 4.2-5.4MHz by an FM playback (PB) equalizer 12 and to a playback chrominance signal of 743kHz by a playback (PB) color equalizer 14. The equalized playback FM video signal is demodulated in a modulator/demodulator 16 and output as a video signal. The equalized playback chrominance signal is up converted and output as a chrominance signal. The output video signal and chrominance signal are mixed in a Y/C mixer 20 and output as a composite video signal.

In recording, an external composite video signal and a composite video signal supplied from a VHS recording/reproducing system 200 are selectively input by a first switch (SW1) 22. The input composite video signal is separated into a video signal and chrominance signal in a Y/C separator 24. The separated video signal is modulated in modulator/demodulator 16 and output as a recording FM video signal of the frequency band of 4.2-5.4MHz. The separated chrominance signal is down converted to 743kHz in a chrominance down/up converter 18. The recording FM video signal and down converted chrominance signal are mixed in mixer 26, amplified in a recording (REC) amplifier 28, and recorded on the 8mm tape by a recording head.

The recording/reproducing system 200 for the VHS tape, amplifies a signal picked up from a playback head by a playback amplifier 30, during playback. The amplified playback signal is equalized to a playback FM video signal of 3.4-4.4MHz by an FM equalizer 32 and to a playback chrominance signal of 629kHz by a color equalizer 34. The equalized playback FM video signal is demodulated in a modulator/demodulator 36 and output as a video signal. The equalized playback chrominance signal is up converted in chrominance up/down converter 38 and output as a chrominance signal. The output video signal and chrominance signal are mixed in a mixer 40 and output as a composite video signal.

In recording, an external composite video signal and a composite video signal supplied from 8mm recording/reproducing system 100 are selectively input by a second switch (SW2) 42. The input composite video signal is separated into a video signal and chrominance signal in a separator 44. The separated video signal is modulated in modulator/demodulator 36 and output as a recording FM video signal of the frequency band of 3.4-4.4MHz. The separated chrominance signal is down converted to 629kHz in chrominance down/up converter 38. The recording FM video signal and down converted chrominance signal are mixed in mixer 46, amplified in a recording amplifier 48, and recorded on the VHS tape by a recording head.

In such a conventional method, the frequency characteristic of an original signal is deteriorated through the modulation/demodulation of the video signal. After being copied three or four times, the shape and edges of an image contour are collapsed to create white stains, resulting in a poor quality image.

In order to attempt to overcome the problem, embodiments of the present invention aim to provide an apparatus for directly copying the FM signal without the intervening modulation or demodulation operation.

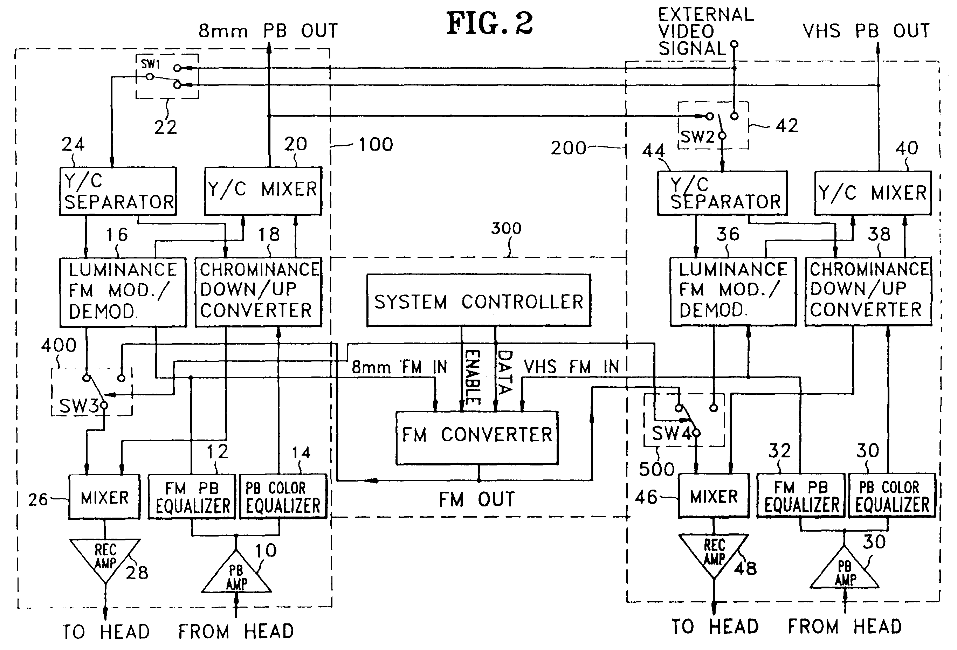

In Figure 2, the same components as those of Figure 1 are numbered with the same numerals and the detailed description thereof will be omitted. The apparatus of the present invention further comprises an FM converter 300 for receiving the playback FM video signals of a first recording/reproducing portion (or 8mm recording/reproducing system) 100 and of a second recording/reproducing portion (or VHS recording/reproducing system) 200 and supplying the recording FM video signal to first and second recording/reproducing portions 100 and 200, first switching means 400 for selectively supplying the recording FM video signal supplied from modulator/demodulator 16 of the first recording/reproducing portion 100 and the recording FM video signal supplied from the FM converter 300 to mixer 26 according to a given copying mode, and second switching means 500 for selectively supplying the recording FM video signal supplied from modulator/demodulator 36 of second recording/reproducing portion 200 and the recording FM video signal supplied from the FM converter to mixer 46.

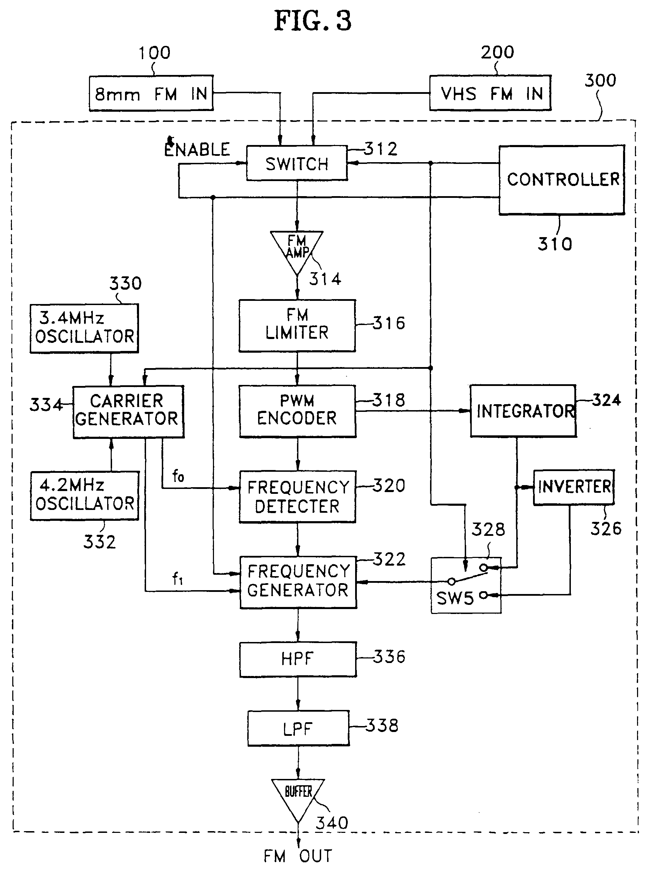

Referring to Figure 3, the operating mode of FM converter 300 is determined in response to a control signal generated from a controller 310. The FM converter 300 comprises an input selection switch 312 for selectively receiving the playback FM video signals supplied from first and second recording/reproducing portions 100 and 200 according to a copying operation mode given from controller 310, wave-shaping means for receiving the selected playback FM video signal, amplifying the received signal in an amplifier 314, limiting the amplified signal in a limiter 316 and wave-shaping the limited signal in a pulse-width modulating encoder 318, to output a square-wave signal, a frequency detector 320 for comparing the frequency of the wave-shaped square wave signal with the frequency of a given first reference signal and detecting the frequency difference, a control voltage generator composed of an integrator 324, an inverter 326 and a switch 328, for integrating the square-wave signal and thereby selectively generating a direct-current signal proportional to the frequency and a signal in which the direct-current signal is inverted, according to the given copying mode, a frequency generator 322 for generating an FM video signal of a predetermined band as a second reference signal in response to the output signal of the frequency detector 320 and the control voltage signal, a reference signal generator composed of a first oscillator 330, a second oscillator 332 and an output selector 334, for generating a first reference signal (f0) of 3.4MHz for VHS and a second reference signal (f1) of 4.2MHz for 8mm and alternately supplying the signals to the frequency detector 320 and frequency generator 322, according to the given copying operation mode, and an output circuit composed of a high-pass filter (HPF) 336, a low-pass filter (LPF) 338 and a buffer amplifier 340, for buffering the output of the frequency generator 322.

The operation and effect of the apparatus of the present invention constructed as above will be explained below.

First, in copying an 8mm format onto a VHS tape, first recording/reproducing portion 100 operates in the playback mode, and second recording/reproducing portion 200 operates in the recording mode. The playback FM video signal reproduced in the first recording/reproducing system is supplied to FM converter 300. The chrominance signal is up converted through chrominance up/down converter 18 and supplied to second recording/reproducing portion 200 through Y/C mixer 20. The chrominance signal is input to separator 44 through second switch 42 of second recording/reproducing system 200, down converted into 629kHz in chrominance up/down converter 38, and supplied to mixer 46. The playback FM video signal is selected through input selection switch 312 of FM converter 300 and wave-shaped into a square-wave signal by the wave-shaping means (314, 316 and 318). The square-wave signal is supplied to frequency detector 320 and the control voltage generating means (324, 326 and 328). The reference signal generating means (330, 332 and 334) is switching-controlled to supply the 4.2MHz reference signal to frequency detector 320 and the 3.4MHz reference signal to the frequency generator 322. Frequency detector 320 compares the input square-wave signal with the reference signal and generates a detection signal for activating the frequency generator if the frequency of the square-wave signal is greater than or equal to 4.2MHz of the reference as it falls within 4.2-5.4MHz. The control voltage generating means (324, 326 and 328) generates a control voltage proportional to the frequency of the square-wave signal. The frequency generator 322 generates an FM signal of 3.4-4.4MHz which varies in proportion to the control voltage referenced to the 3.4MHz reference signal. The generated FM signal, a recording FM video signal which is converted into the VHS frequency band, is high-pass-filtered and then low-pass-filtered, through the output means (336, 338 and 340), amplified to an appropriate level suitable for mixing with the chrominance signal, and supplied to mixer 46.

Accordingly, the recording is performed so that the chrominance signal is transmitted after frequency conversion and the video signal is directly transmitted as an FM signal, thereby preventing the characteristic deterioration of a video signal.

The case in which a VHS format is copied onto an 8mm tape is carried out in a manner similar to the above. Here, the first reference signal is 3.4MHz and the second reference signal is 4.2MHz. Therefore, the VHS FM signal is detected and then converted into an 8mm FM signal.

As described above, in copying both the 8mm tape and VHS tape, the present invention copies a video signal directly as an FM signal without FM modulation/demodulation of a video signal, thereby maintaining high picture quality.

## Claims

1. A double-deck magnetic recording/reproducing apparatus for recording/reproducing tapes of a first and a second format, the apparatus comprising:
a first recording/reproducing portion (100) for, during playback, receiving a first format encoded video playback signal comprising an FM video signal of a first frequency band and a first frequency down-converted chrominance signal from a tape of said first format, separating the first format encoded video playback signal into a chrominance and a first playback FM video signal portion and constructing therefrom a first composite video signal by up converting the first frequency down converted chrominance signal, demodulating the FM video signal of first frequency band and mixing together the up converted first frequency chrominance signal and the FM demodulated video signal; and, during recording, receiving an input composite video signal, separating the input composite video signal into a chrominance and a first recording FM video signal portion and constructing therefrom a first format encoded video recording signal by FM-modulating the first recording FM video signal into the first frequency band, down converting the chrominance portion into the first frequency and mixing together the down converted and modulated signals for recording on said tape of said first format;
a second recording/reproducing portion (200) for, during playback, receiving a second format encoded video playback signal comprising an FM video signal of a second frequency band and a second frequency down-converted chrominance signal from a tape of said second format, separating the second format encoded video playback signal into a chrominance and a second playback FM video signal portion and constructing therefrom a second composite video signal by up converting the second frequency down converted chrominance signal, demodulating the FM video signal of second frequency band and mixing together the up converted second frequency chrominance signal and the FM demodulated video signal; and, during recording, receiving an input composite video signal, separating the input composite video signal into a chrominance and a second recording FM video signal portion and constructing therefrom a second format encoded video recording signal by FM modulating the second recording FM video signal into the second frequency band, down converting the chrominance portion into the second frequency and mixing together the down converted and modulated signals for recording on said tape of said second format; and
FM converter and switching means comprising an FM converter means (300), a first switching means (400) and a second switching means (500) for, in accordance with a given copying mode, receiving either the first or second playback FM video signal portions from said first recording/reproducing portion (100) or from said second recording/reproducing portion (200) respectively, and converting the received signal into a recording FM video signal of said second or first format respectively and transmitting the particular recording FM video signal to the respective second or first recording/reproducing portion (200, 100) to enable the copying of signals from said first or second format into signals of said second or first format respectively, wherein the first switching means (400) selectively supplies the recording FM video signal of the first recording/reproducing portion and the recording FM video signal of said FM converter means (300) to a recording head for the tape of said first format according to a first given copying mode and the second switching means (500) selectively supplies the recording FM video signal of said second recording/reproducing portion and the recording FM video signal of said FM converter means (300) to a recording head for the tape of said second format according to the second given copying mode, the apparatus being characterised in that:
said FM converter means (300) comprises: input selection switching means (312) for selectively receiving the playback FM video signals from said first and second recording/reproducing portions (100, 200) according to the given copying mode; wave-shaping means (314, 316, 318) for receiving said selected playback FM video signal and generating a square-wave signal; frequency detecting means (320) for comparing the frequency of said square-wave signal with the frequency of a given first reference signal and detecting the frequency difference; control voltage generating means (324, 326, 328) for integrating said square-wave signal and selectively generating a direct-current signal proportional to the frequency and a signal in which said direct-current signal is inverted, as a control voltage signal, according to said given copying mode; frequency generating means (322) for generating an FM video signal of a predetermined band at a given second reference signal in response to said frequency detection signal and said control voltage signal; reference signal generating means (330, 332, 334) for selectively generating said first reference signal for said first format and said second reference signal for said second format according to said given copying mode and supplying said first and second reference signals to said frequency detecting means (320) and frequency generating means (322); and output means (336, 338, 340) for buffering and outputting the output of said frequency generating means (322).

2. A double-deck magnetic recording apparatus according to claim 1, wherein said first format is utilised for 8mm video tapes and said second format is utilised for 0.5 inch VHS-format video tapes.

## Patentansprüche

1. Magnetisches Doppeldeck-Aufnahme-/Wiedergabegerät für Aufnahme-/Wiedergabebänder eines ersten und eines zweiten Formats, wobei das Gerät umfaßt:
einen ersten Aufnahme-/Wiedergabeabschnitt (100), der während der Wiedergabe ein in einem ersten Format codiertes Videowiedergabesignal, das ein FM Videosignal eines ersten Frequenzbands und ein erstes Chrominanzsignal mit abwärtsgewandelter Frequenz umfaßt von einem Band des ersten Formats erhält, das in dem ersten Format codierte Wiedergabevideosignal in einem Chrominanz- und einen ersten FM Wiedergabevideosignalabschnitt trennt und davon ein erstes FBAS-Signal konstruiert, indem das erste Chrominanzsignal mit der abwärts umgewandelten Frequenz aufwärtsgewandelt wird, das FM Videosignal des ersten Frequenzbands demoduliert und das Chrominanzsignal mit der aufwärtsgewandelten ersten Frequenz und das demodulierte FM Videosignal vermischt werden; und während der Aufnahme ein eingegebenes FBAS-Signal erhält, das eingegebene FBAS-Signal in einen Chrominanz- und einen ersten FM Aufnahmevideosignalabschnitt trennt und davon ein im ersten Format codiertes Videoaufnahmesignal durch FM Modulation des ersten FM Aufnahmevideosignals in das erste Frequenzband konstruiert, den Chrominanzabschnitt in die erste Frequenz umwandelt und die abwärtgewandelten und modulierten Signale zur Aufnahme auf dem Band des ersten Formats zusammenmischt;
einen zweiten Aufnahme-/Wiedergabeabschnitt (100), der während der Wiedergabe ein in einem zweiten Format codiertes Videowiedergabesignal, das ein FM Videosignal eines zweiten Frequenzbands und ein zweites Chrominanzsignal mit abwärtsgewandelter Frequenz umfaßt, von einem Band des zweiten Formats erhält, das in dem zweiten Format codierte Wiedergabevideosignal in einem Chrominanz- und einen zweiten FM Wiedergabevideosignalabschnitt trennt und davon ein zweites FBAS-Signal konstruiert, indem das zweite Chrominanzsignal mit der abwärts umgewandelten Frequenz aufwärtsgewandelt wird, das FM Videosignal des zweiten Frequenzbands demoduliert und das Chrominanzsignal mit der aufwärtsgewandelten zweiten Frequenz und das demodulierte FM Videosignal vermischt werden; und während der Aufnahme ein eingegebenes FBAS-Signal erhält, das eingegebene FBAS-Signal in einen Chrominanz- und einen zweiten FM Aufnahmevideosignalabschnitt trennt und davon ein im zweiten Format codiertes Videoaufnahmesignal durch FM Modulation des zweiten FM Aufnahmevideosignals in das zweite Frequenzband konstruiert, den Chrominanzabschnitt in die zweite Frequenz umwandelt und die abwärtgewandelten und modulierten Signale zur Aufnahme auf dem Band des zweiten Formats zusammenmischt;
einen FM Wandler- und Schaltereinrichtung, die eine FM Wandlereinrichtung (300), eine erste Schaltereinrichtung (400) und eine zweite Schaltereinrichtung (500) umfaßt, um entsprechend einem gegebenen Kopiermodus entweder den ersten oder zweiten FM Wiedergabevideosignalabschnitt von dem ersten Aufnahme-/Wiedergabeabschnitt (100) oder von dem zweiten Aufnahme-/Wiedergabeabschnitt (200) jeweils zu erhalten und das erhaltene Signal in ein FM Aufnahmevideosignal des zweiten bzw. ersten Formats umzuwandeln und das bestimmte FM Aufzeichnungsvideosignal zu dem entsprechenden zweiten oder ersten Aufnahme-/Wiedergabeabschnitt (200, 100) zu übertragen, um das Kopieren von Signalen von dem ersten oder zweiten Format in Signale des zweiten bzw ersten Formats zu ermöglichen, wobei die erste Schaltereinrichtung (400) selektiv das FM Aufnahmevideosignal des ersten Aufnahme-/Wiedergabeabschnitts und das FM Aufnahmevideosignal der FM Wandlereinrichtung (300), einem Aufzeichnungskopf für das Band des ersten Formats entsprechend einem ersten gegebenen Kopiermodus zuführt, und die zweite Schaltereinrichtung (500) selektiv das FM Aufnahmevideosignal des zweiten Aufnahme-/Wiedergabeabschnitts und das FM Aufnahmevideosignal der FM Wandlereinrichtung einem Aufzeichnungskopf für das Band des zweiten Formats entsprechend dem zweiten gegebenen Kopiermodus zuführt, wobei die Vorrichtung **dadurch gekennzeichnet** ist, daß die FM Wandlereinrichtung (300) umfaßt: eine Eingabeauswählschaltereinrichtung (312), die selektiv die FM Wiedergabevideosignale von dem ersten und zweiten Aufnahme-/Wiedergabeabschnitt (100, 200) entsprechend dem gegebenen Kopiermodus erhält; eine Signalformungseinrichtung (314, 316, 318), die das ausgewählte FM Wiedergabevideosignal erhält und ein Rechtecksignal erzeugt; eine Frequenzbestimmungseinrichtung (320), die die Frequenz des Rechtecksignals mit der Frequenz eines gegebenen ersten Bezugssignals vergleicht und die Frequenzdifferenz bestimmt; eine Steuerspannungserzeugungseinrichtung (324, 326, 328), die das Rechtecksignal integriert und selektiv ein Gleichstromsignal, das zu der Frequenz proportional ist sowie ein Signal, bei dem das Gleichstromsignal umgekehrt ist, als ein Steuerspannungssignal entsprechend dem gegebenen Kopiermodus erzeugt; eine Frequenzerzeugungseinrichtung (322), die ein FM Videosignal eines vorbestimmten Bandes bei einem gegebenen zweiten Bezugssignal in Antwort auf das Frequenzbestimmungssignal und das Steuerspannungssignal erzeugt; eine Bezugssignalerzeugungseinrichtung (330, 332, 334), die selektiv das erste Bezugssignal für das erste Format und das zweite Bezugssignal für das zweite Format entsprechend dem gegebenen Kopiermodus erzeugt und das erste und das zweite Bezugssignal der Frequenzbestimmungseinrichtung (320) und der Frequenzerzeugungseinrichtung (322) zuführt; und eine Ausgabeeinrichtung (336, 338, 340), die den Ausgang der Frequenzerzeugungseinrichtung (322) puffert und ausgibt.

2. Magnetisches Doppeldeckaufnahmegerät gemäß Anspruch 1, wobei das erste Format für 8 mm Videobänder verwendet wird und das zweite Format für 0,5 Zoll VHS-Format Videobänder verwendet wird.

## Revendications

1. Appareil d'enregistrement/reproduction magnétique à deux platines destiné à enregistrer/reproduire des bandes d'un premier et d'un second format, l'appareil comportant:
une première partie d'enregistrement/reproduction (100) pour, au cours de la reproduction, recevoir un signal de reproduction vidéo codé d'un premier format constitué d'un signal vidéo FM (modulé en fréquence) d'une première bande de fréquences et d'un signal de chrominance abaissé en fréquence d'une première fréquence en provenance d'une bande dudit premier format, pour séparer le signal de reproduction vidéo codé du premier format en une partie chrominance et en une partie premier signal vidéo FM de reproduction et pour en construire un premier signal vidéo composite en augmentant en fréquence le signal de chrominance abaissé en fréquence de la première fréquence, en démodulant le signal vidéo FM de la première bande de fréquences et mélangeant ensemble le signal de chrominance de la première fréquence augmenté en fréquence et le signal vidéo FM démodulé; et pour, pendant l'enregistrement, recevoir un signal vidéo composite d'entrée, pour séparer le signal vidéo composite d'entrée en une partie chrominance et en une partie premier signal vidéo FM d'enregistrement et pour en construire un signal d'enregistrement vidéo codé d'un premier format en effectuant une modulation de fréquence du premier signal vidéo FM d'enregistrement afin de le faire passer dans la première bande de fréquences, en abaissant en fréquence la partie chrominance jusqu'à la première fréquence et mélangeant ensemble les signaux abaissé an fréquence et modulé en vue de leur enregistrement sur ladite bande dudit premier format ;
une seconde partie d'enregistrement/reproduction (200) pour, au cours de la reproduction, recevoir un signal de reproduction vidéo codé d'un second format constitué d'un signal vidéo FM d'une seconde bande de fréquences et d'un signal de chrominance abaissé an fréquence d'une seconde fréquence en provenance d'une bande dudit second format, pour séparer le signal de reproduction vidéo codé du second format en une partie chrominance et en une partie second signal vidéo FM de reproduction et pour en construire un second signal vidéo composite en augmentant en fréquence le signal de chrominance abaissé en fréquence de la seconde fréquence, en démodulant le signal vidéo FM de la seconde bande de fréquences et mélangeant ensemble le signal de chrominance de la seconde fréquence augmenté en fréquence et le signal vidéo FM démodulé; et pour, pendant l'enregistrement, recevoir un signal vidéo composite d'entrée, pour séparer le signal vidéo composite d'entrée en une partie chrominance et en une partie second signal vidéo FM d'enregistrement et pour en construire un signal d'enregistrement vidéo codé d'un second format en effectuant une modulation de fréquence du second signal vidéo FM d'enregistrement afin de le faire passer dans la seconde bande de fréquences, en abaissant en fréquence la partie chrominance jusqu'à la seconde fréquence et mélangeant ensemble les signaux abaissé en fréquence et modulé en vue de leur enregistrement sur ladite bande dudit second format; et
des moyens de conversion FM et de commutation comportant un moyen de conversion FM (300), un premier moyen de commutation (400) et un second moyen de commutation (500) pour, conformément à un mode de duplication donné, recevoir soit la première, soit la seconde partie signal vidéo FM de reproduction en provenance de ladite première partie d'enregistrement/reproduction (100) ou en provenance de ladite seconde partie d'enregistrement/reproduction (200), respectivement, et pour convertir le signal reçu en un signal vidéo FM d'enregistrement dudit second ou dudit premier format, respectivement, et pour transmettre le signal vidéo FM d'enregistrement en question à la seconde ou à la première partie d'enregistrement/reproduction (200, 100) respective afin de permettre de copier des signaux en provenance dudit premier ou dudit second format en en faisant des signaux dudit second ou dudit premier format, respectivement, ledit premier moyen de commutation (400) fournissant sélectivement le signal vidéo FM d'enregistrement de la première partie d'enregistrement/reproduction et le signal vidéo FM d'enregistrement dudit moyen de conversion FM (300) à une tête d'enregistrement prévue pour la bande dudit premier format conformément à un premier mode de duplication donné, et le second moyen de commutation (500) fournissant sélectivement le signal vidéo FM d'enregistrement de ladite seconde partie d'enregistrement/reproduction et le signal vidéo FM d'enregistrement dudit moyen de conversion FM (300) à une tête d'enregistrement prévue pour la bande dudit second format conformément au second mode de duplication donné, l'appareil étant caractérisé en ce que:
ledit moyen de conversion FM (300) comporte: des moyens de commutation de sélection d'entrée (312) pour recevoir sélectivement les signaux vidéo FM de reproduction an provenance desdites première et seconde parties d'enregistrement/reproduction (100, 200) conformement au mode de duplication donné; des moyens de formation d'ondes (314, 316, 318) pour recevoir ledit signal vidéo FM de reproduction sélectionné et pour générer un signal en onde carrée; des moyens de détection (320) pour comparer la fréquence dudit signal en onde carrée à la fréquence d'un premier signal de référence donné et pour détecter la différence de fréquence; des moyens de génération de tension de commande (324, 326, 328) pour intégrer ledit signal an onde carrée et pour générer sélectivement un signal en courant continu proportionnel à la fréquence et un signal dans lequel ledit signal en courant continu est inversé, en tant que signal de tension de commande, conformément audit mode de duplication donné ; des moyens de génération de fréquence (322) pour générer un signal vidéo FM d'une bande prédéterminée en tant que second signal de référence donné en réponse audit signal de détection de fréquence et audit signal de tension de commande; des moyens de génération de signaux de référence (330, 332, 334) pour générer sélectivement ledit premier signal de référence pour ledit premier format et ledit second signal de référence pour ledit second format conformément audit mode de duplication donné et pour fournir lesdits premier et second signaux de référence auxdits moyens de détection de fréquence (320) et auxdits moyens de génération de fréquence (322) ; et des moyens de sortie (336, 338, 340) pour mettre en mémoire tampon et pour délivrer la sortie desdits moyens de génération de fréquence (322).

2. Appareil d'enregistrement/reproduction magnétique à deux platines selon la revendication 1, dans lequel ledit premier format est utilisé pour les bandes vidéo de 8 mm et ledit second format est utilisé pour les bandes vidéo de format VHS de 0,5 pouce.
